# EUROPEAN PATENT APPLICATION

(11) **EP 3 328 108 A1**
(43) Date of publication of application: **30.05.2018**
(21) Application number: 17194016.6
(22) Date of filing: 22.07.2009
(51) Int. Cl.: H04W 12/06, H04L 29/06, H04W 88/04, H04W 88/08

(54) **AUTHENTICATION METHOD, RE-AUTHENTICATION METHOD AND COMMUNICATION APPARATUS**

(30) Priority: 29.07.2008 CN 200810041297
(62) Divisional of application: 09802396.3
(71) Applicant: Huawei Technologies Co., Ltd., Longgang District Shenzhen, Guangdong 518129 (CN)
(72) Inventor: LIU, Jing, Shenzhen, Guangdong 518129 (CN); CHEN, Jing, Shenzhen, Guangdong 518129 (CN); PENG, Yan, Shenzhen, Guangdong 518129 (CN); ZHANG, Aiqin, Shenzhen, Guangdong 518129 (CN)
(74) Representative: Pfenning, Meinig & Partner mbB

(57) **Abstract**

An authentication method, a re-authentication method, a communication apparatus, and a communication system are provided. The authentication method includes: a relay station (RS) sends an authentication request to a base station, the authentication request including a digital certificate of the RS; an authentication response sent by the base station is received, the authentication response including the digital certificate of the base station and being sent by the base station after authentication of the digital certificate of the RS is successful; the digital certificate of the base station is authenticated to obtain an authentication key (AK). In the embodiments of the present invention, the authentication request including the digital certificate of the RS is sent to the base station via the RS, and then the authentication response sent by the base station is received, which includes the digital certificate of the base station; the base station may achieve a secure network access of the RS by performing authentication in a bidirectional way without equipping the RS with a User Subscriber Identify Module (USIM) card. The re-authentication method may ensure the effectiveness of the AK.

## Description

The present application claims the benefit of priority to China Patent Application No. 200810041297.0, filed on July 29, 2008 and entitled "AUTHENTICATION METHOD, RE-AUTHENTICATION METHOD AND COMMUNICATION APPARATUS", which is incorporated herein by reference in its entirety.

### FIELD OF THE INVENTION

The present invention relates to the field of communication technology, and more particularly to an authentication method, a re-authentication method, a communication apparatus and a communication system.

### BACKGROUND OF THE INVENTION

As the coverage of a mobile system is becoming increasingly larger, the number of a user accessing the system is progressively increased, and services provided by a service provider are diversified, leading to an increasingly complex network. Thus, currently, it becomes an urgent problem that need to be solved about how to ensure the security of the network and service information.

In a mobile communication system, in order to ensure the security of operating a service, a network side needs to perform an authentication process on accessing user equipment (UE), so that an illegal UE cannot obtain the services provided by the network side and thus protect the interests of operators. Meanwhile, the UE also needs to verify whether authentication information sent by the network side is valid, i.e., the UE performs an authentication process on the network side to prevent an illegal network side utilizing the authentication information used by a legal network side to impose a replay attack on the UE and causing the UE to believe that the illegal network side is valid.

In an existing long term evolved (LTE) network system, an air interface link between a UE and an E-UTRAN Node B (eNB) is single-hop, and an authentication and key agreement (AKA) protocol of an evolved packet system (EPS) is adopted to implement the authentication process of the user and the network side, which includes the process of identity authentication and key agreement whose implementation is based on the fact that the user and the network side pre-share a permanent symmetric key. The entire authentication process is carried out in one authentication process and performs authentication by way of an authentication tuple. The authentication tuple includes: a random number (RAND), an Expected user Response (XRES), a key (*K_{ASM}*) and an Authentication token (AUTN). In which, the key is derived from a cipher key (CK) and an integrity key (IK) collectively; the AUTN further includes three parts, namely, a sequence number (SQN), an authentication management field (AMF) and a message authentication code (MAC).

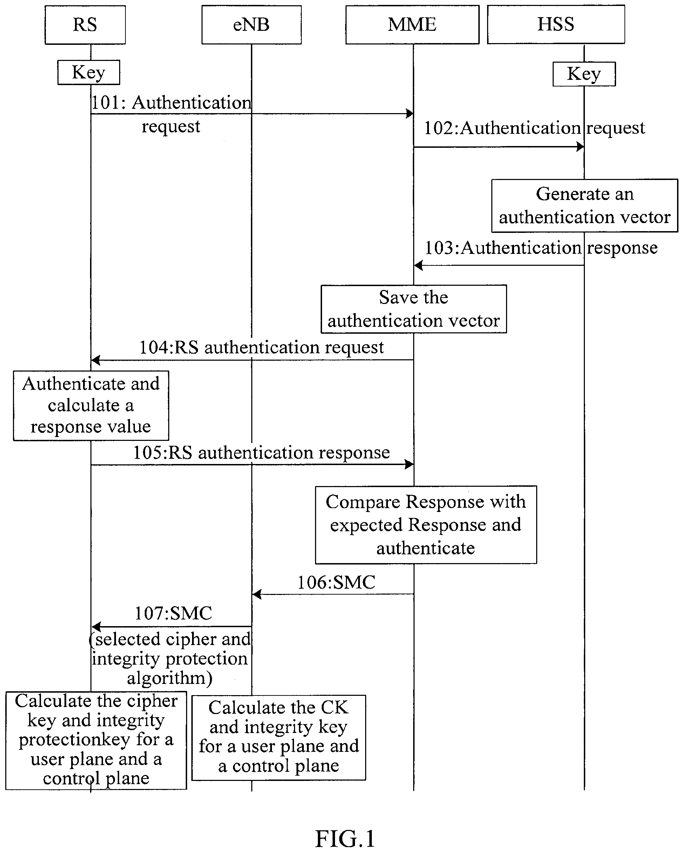

After the introduction of a relay station (RS), the air interface link between the UE and the eNB in the LTE system is segmented into an access link between the UE and the RS and a relay link between the RS and the eNB. During network access of the RS, the RS can be treated as a UE to access the network, i.e., the RS adopts an authentication process which is the same as that of a traditional UE. FIG. 1 shows the specific access process, and the authentication process flow during RS accessing is as follows.

In Step 101, an RS sends an authentication request to a mobility management entity (MME), and the request carries an international mobile subscriber identity (IMSI) of the RS, capabilities of the RS (i.e., supported key deriving algorithm of cipher and integrity protection) and a key identifier (*KSI_{ASME}*) corresponding to the derived key (*K_{ASME}*) and the like.

In Step 102, the MME forwards the authentication request of the RS to a home subscriber server (HSS), and the request carries the IMSI of the RS, the identity of a serving network and the like. The HSS finds a pre-shared key K corresponding to the RS according to the IMSI of the RS, and randomly generates a RAND, then generates an authentication vector (AV) corresponding to the RS according to the information including the RAND, a currently saved authentication SQN, the pre-shared key K between the RS and the HSS, in which the AV includes RAND, XRES, *K_{ASME}* and AUTN. For RS, the pre-shared key K between the RS and the HSS is stored in a user subscriber identify module (USIM) card.

In Step 103, the HSS returns an authentication response to the MME, the authentication response carries the authentication vector AV of the RS, the key identifier *KSI_{ASME}* corresponding to the key *K_{ASME}* and the like, and the MME saves the received authentication vector of the RS.

In Step 104, the MME sends an RS authentication request to the RS, and the request carries the RAND and AUTN corresponding to the authentication vector of the RS, as well as the key identifier *KSI_{ASME}* corresponding to the key *K_{ASME}* and the like.

In Step 105, the RS performs check according to the received RAND and AUTN, which includes calculates a MAC value according to the received RAND and the SQN in the AUTN, as well as the pre-shared key K stored locally, and compares whether the calculated MAC value and a MAC value included in the received AUTN are consistent, if so, the network side is authenticated successfully by the RS, then RS calculates a Response (RES) based on the RAND and the pre-shared key K stored locally, and sends this calculated RES to the MME.

In Step 106, the MME compares whether the RES received from the RS and the locally stored XRES in the AV of the RS are consistent. If so, the RS is authenticated successfully by the network side, the MME further derives an air interface key *K_{eNB}* according to the key *K_{ASME},* and delivers the air interface key and the key deriving algorithm of cipher and integrity protection supported by the RS to an eNB via a security mode command (SMC).

In Step 107, the eNB determines the key deriving algorithm of the cipher and integrity protection for user plane and the key deriving algorithm of the cipher and integrity protection for control plane in air interface according to the received capability of the RS and its own capability (i.e., the key deriving algorithm of cipher and integrity protection supported by itself), and delivers the determined key deriving algorithms to the RS through the SMC. At this point, the RS and the eNB may respectively use the key *K_{eNB}* in air interface to further derive the cipher key and integrity protection key in air interface based on the determined key deriving algorithms.

During implementing the present invention, the inventors found that at least the following disadvantages exist in the above solution.

In the LTE system after introducing the RS, the authentication process of the RS requires to equip the RS with a USIM card in order to store the permanent key pre-shared between the RS and the HSS and the like, which will increase the complexity of the RS.

### SUMMARY OF THE INVENTION

The present invention provides an authentication method, a re-authentication method and a communication apparatus, which are implemented through the following technical solutions.

An authentication method is provided, comprising;
sending, by an RS, an authentication request to a base station, the authentication request including a digital certificate of the RS;
receiving an authentication response sent by the base station, the authentication response includes a digital certificate of the base station, which is sent when authentication of the digital certificate of the RS is completed successfully; and
authenticating the digital certificate of the base station, then deriving the authentication keys (AK).

A re-authentication method is provided, which includes the following steps;
receiving a re-authentication request sent by an RS;
deriving a cipher key and an integrity protection key ;
generating a first message authentication code (MAC1) from the cipher key and the integrity protection key, and sending the MAC1 to the RS to instruct the RS to authenticate the MAC1; and
receiving a second message authentication code (MAC2) that is sent by the RS after the authentication of MAC1 is successful, and authenticating the MAC2.

A communication apparatus is provided, which includes an authentication request sending unit, an authentication response receiving unit, an authentication unit, and an acquiring unit.

The authentication request sending unit is configured to send an authentication request to a base station, the authentication request including a digital certificate of an RS.

The authentication response receiving unit is configured to receive an authentication response sent by the base station, where the authentication response includes a digital certificate of the base station and is sent by the base station after authentication of the digital certificate of the RS is successful.

The authentication unit is configured to authenticate the digital certificate of the base station received by the authentication response receiving unit.

The acquiring unit is configured to acquire an AK.

A communication apparatus is provided, which includes a re-authentication request receiving unit, a key deriving unit, a generating unit, a sending unit, a receiving unit, and an authentication unit.

The re-authentication request receiving unit is configured to receive a re-authentication request sent by an RS.

The key deriving unit is configured to derive a cipher key and an integrity protection key.

The generating unit is configured to generate a MAC1 from the cipher key and the integrity protection key derived by the key deriving unit.

The sending unit is configured to send the MAC 1 generated by the generating unit to the RS to instruct the RS to authenticate the MAC1.

The receiving unit is configured to receive a MAC2 that is sent by the RS after the authentication is successful.

The authentication unit is configured to authenticate the MAC2 received by the receiving unit.

A communication system is provided, which includes the communication apparatus as described in the above embodiments.

It can be seen that, in the embodiments of the present invention, an RS sends an authentication request including a digital certificate of the RS to a base station, and receives an authentication response including a digital certificate of the base station sent by the base station. In this case, authentication is performed in a bidirectional way, thus enabling the base station to implement a secure network access of the RS without equipping the RS with a USIM card. Meanwhile, in order to shorten the time delay for updating the AK, the present invention further provides a method for an RS to implement re-authentication quickly, in which a base station receives a re-authentication request from the RS, re-derives a cipher key and an integrity protection key, and performs authentication by utilizing the re-derived cipher key and integrity protection key, thus ensuring the synchronization of newly derived AK between the RS and the base station and ensuring the effectiveness of the AK in air interface.

### BRIEF DESCRIPTION OF THE DRAWINGS

To describe the technical solution under the present invention and the conventional art more clearly, the following outlines the accompanying drawings involved in the conventional art and the embodiments of the present invention. Apparently, the accompanying drawings outlined below are not exhaustive, and persons of ordinary skill in the art can derive other drawings from such accompanying drawings without any creative effort.
FIG. 1 is a signaling diagram of access authentication of an RS in the prior art;
FIG. 2 is a flow chart for implementing a method according to a first embodiment of the present invention;
FIG. 3 is a signaling diagram for implementing a method according to a second embodiment of the present invention;
FIG. 4 is a signaling diagram for implementing a method according to a third embodiment of the present invention;
FIG. 5 is a signaling diagram for implementing a method according to a fourth embodiment of the present invention;
FIG. 6 is a flow chart for implementing a method according to a fifth embodiment of the present invention;
FIG. 7 is a signaling diagram for implementing a method according to a sixth embodiment of the present invention;
FIG. 8 is a flow chart for implementing a method according to a seventh embodiment of the present invention;
FIG. 9 is a signaling diagram for implementing a method according to an eighth embodiment of the present invention;
FIG. 10 is a signaling diagram for implementing a method according to a ninth embodiment of the present invention;
FIG. 11 is a signaling diagram for implementing a method according to a tenth embodiment of the present invention;
FIG. 12 is a signaling diagram for implementing a method according to an eleventh embodiment of the present invention;
FIG. 13 is a schematic view of a first communication apparatus according to an embodiment of the present invention;
FIG. 14 is a schematic view of a second communication apparatus according to an embodiment of the present invention;
FIG. 15 is a block diagram of a first system according to an embodiment of the present invention; and
FIG. 16 is a block diagram of a second system according to an embodiment of the present invention.

### DETAILED DESCRIPTION OF THE INVENTION

The authentication method, the re-authentication method and the communication apparatus provided by the present invention enable an RS to access network normally without being equipped with a USIM card.

An RS is access network equipment. In most cases, the RS may be directly deployed in a network by an access network operator, i.e., the RS and the eNB belong to the same operator. The RS cannot use the traditional AKA authentication if the RS is not equipped with a USIM card. Therefore, an authentication method based on an asymmetric key used in digital certificates can be used, enabling the RS to access the network normally without being equipped with the USIM card. Further, in the embodiments of the present invention, it is the access network side that implement such authentication functions as the authentication of the RS and key derivation and the like, thereby avoiding modification to the core network due to the introduction of the RS into the access network, and thus minimizing the effect of the introduction of the RS on the whole network.

As to the RS authentication method based on digital certificates presented in the present invention, its implementation is based on the fact that both the RS and the eNB include respective digital certificates authorized by a third party, the digital certificates can be digital certificates used in the prior art, such as X.509 digital certificate.

The following embodiments 1 to 6 illustrate corresponding embodiments according to different entities generating the AK and different time for delivering the keys.

### Embodiment 1

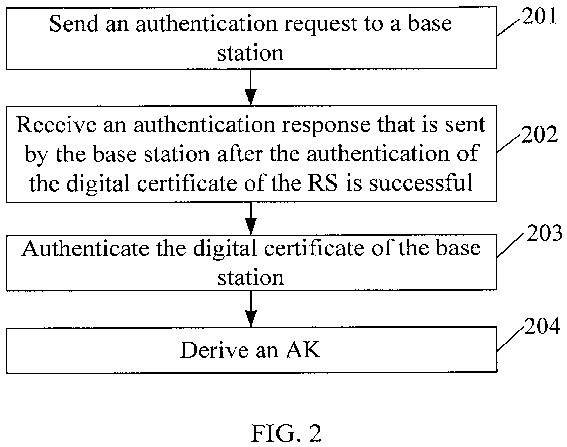

The present invention can adopt the following method to enable an RS to securely access network without being equipped with a USIM card. Referring to FIG. 2, in an embodiment, the present invention provides an authentication method, which includes the following steps.

In Step 201, an authentication request is sent to a base station, and the authentication request includes a digital certificate of an RS.

The above base station may be an eNB, and can also be other non-evolved NBs, the implementation of them are basically the same. Various systems that support digital certificate-based authentication may authenticate an RS after introducing the RS. Therefore, in subsequent embodiments, an eNB refers to a base station that can support digital certificate-based authentication.

The authentication request may include the digital certificate of the RS, such as X.509 digital certificate, as well as capabilities of the RS, a signature of the RS on the digital certificate and RAND1 generated by the RS.

In Step 202, an authentication response that is sent by the base station is received, the authentication response is sent after the authentication of the digital certificate of the RS is completed successfully, and the authentication response includes a digital certificate of the base station.

If the above base station may be an eNB, an authentication response that is sent by the eNB is received. The authentication response is sent after the authentication of the digital certificate of the RS is completed successfully, the authentication response includes the digital certificate of the eNB, such as X.509 digital certificate, the authentication response may also include a signature of the eNB on the digital certificate, RAND2 generated by the eNB, and the selected key deriving algorithm of cipher and integrity protection in air interface by eNB based on the capability of the RS.

In Step 203, the digital certificate of the base station is authenticated.

When the base station is an eNB, the digital certificate of the eNB is authenticated.

In Step 204, an AK is derived.

So far, the bidirectional authentication between the RS and the base station is completed. For the security of subsequent communications between the RS and the base station, the method may further include a step of deriving cipher key and integrity protection key in air interface based on the AK.

In the present embodiment, an RS sends an authentication request including a digital certificate of the RS to a base station, and receives an authentication response including a digital certificate of the base station sent by the base station. In this case, authentication is performed in a bidirectional way, thus enabling the base station to implement a secure network access of the RS without equipping the RS with a USIM card.

For ease of the description, specific description is carried out by taking an eNB as an example of the base station in the following embodiments.

Embodiments 2 to 6 illustrate in detail the specific implementation of the above authentication method respectively.

### Embodiment 2

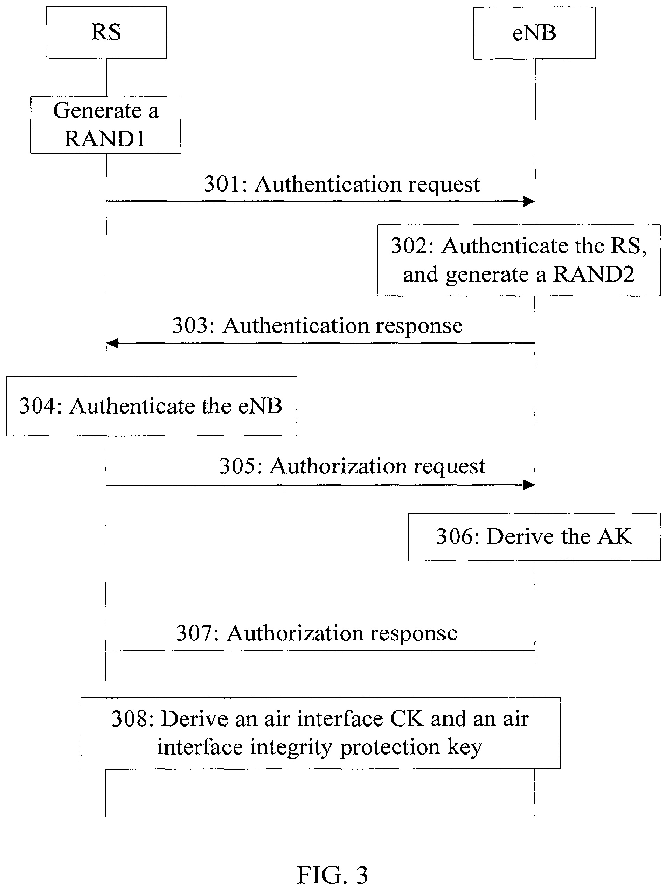

In the present embodiment, the eNB derives an AK and sends the AK to an RS after the bidirectional authentication between the RS and the eNB is completed. Various systems that support digital certificate-based authentication may authenticate an RS after introducing the RS. Referring to FIG. 3, specific steps for implementing a method of the second embodiment are introduced in detail below.

In Step 301, an RS sends an authentication request to an eNB.

The authentication request may be included in an authentication request message, and the authentication request may include a digital certificate of the RS, such as X.509 digital certificate. The authentication request can also include capabilities of the RS, a signature of the RS on the digital certificate, and a RAND1 randomly generated by the RS, where the capabilities of the RS mean the key deriving algorithm of cipher and integrity protection supported by the RS.

In Step 302, the eNB authenticates the digital certificate of the RS through the received signature of the RS on the digital certificate, and generates a RAND2.

The eNB may authenticate the digital certificate of the RS through the received signature of the RS on the digital certificate and the RAND1, after the authentication is successful, the eNB generates the RAND2. And the eNB may further select the key deriving algorithm of cipher and integrity protection in air interface according to the supported key deriving algorithm of cipher and integrity protection by the RS and the supported key deriving algorithm of cipher and integrity protection supported by the eNB.

In Step 303, the eNB sends an authentication response to the RS.

The authentication response includes a digital certificate of the eNB, such as X.509 digital certificate, a signature of the eNB on the digital certificate, the RAND2 randomly generated by the eNB, and the selected key deriving algorithm of cipher and integrity protection in air interface.

In Step 304, the RS authenticates the digital certificate of the eNB.

The RS authenticates the digital certificate of the eNB through the received signature of the eNB on the digital certificate and the RAND2, and completes the authentication of the eNB after the authentication is successful.

In Step 305, the RS sends an authorization request to the eNB.

The authorization request may be included in an authorization request message. A MAC1 may be carried in the authorization request message. The MAC1 is generated by performing integrity protection on the authorization request through a private key of the RS.

In addition, the authorization request message may be selectively ciphered through a public key of the eNB, then sent to the eNB.

In Step 306, the eNB derives an AK.

After receiving the authorization request message from the RS, the eNB first deciphers the authorization request message by using a private key of the eNB if the message is ciphered, and then performs integrity check on the MAC1 according to a public key of the RS; if the authorization request message is not ciphered, the eNB directly performs integrity check on the MAC1 according to the public key of the RS, and derives the AK after the check is successful.

In Step 307, the eNB sends an authorization response to the RS.

The authorization response may be included in an authorization response message. The AK may be carried in the authorization response message. The integrity protection of AK is performed by the private key of the eNB firstly, then the AK is ciphered by the public key of the RS, and sent to the RS.

So far, the bidirectional authentication between the RS and the base station is completed. For the security of subsequent communications between RS and the base station, the method may further include a Step 308.

In Step 308, the RS and the eNB respectively derive a cipher key and an integrity protection key in air interface.

The RS obtains the AK shared with the eNB in air interface after deciphering the received authorization response and performing integrity check. So far, both the RS and the eNB can respectively use the AK to further derive the cipher key and the integrity protection key for user plane and the cipher key and the integrity protection key for control plane in air interface through the selected key deriving algorithm of cipher and integrity protection.

In the present embodiment, the RS sends an authentication request including a digital certificate of the RS to the eNB, and the eNB sends an authentication response including a digital certificate of the eNB to the RS. After the authentication of both parties is successful, the eNB derives an AK and sends the AK to the RS for performing access authentication of the RS, which makes the RS need not to be equipped with a USIM card. Furthermore, a secure network access of the RS can be achieved without modifying the core network.

In the scheme of the embodiment 2, the eNB derives the AK and sends the AK to the RS after the directional authentication between the RS and the eNB is completed successfully. In the following embodiment, the eNB derives the AK and delivers the AK to the RS after the RS is authenticated successfully by the eNB.

### Embodiment 3

In the present embodiment, the eNB derives an AK and delivers the AK to the RS after the RS is authenticated successfully by the eNB. Various systems that support digital certificate-based authentication can authenticate an RS after introducing the RS.

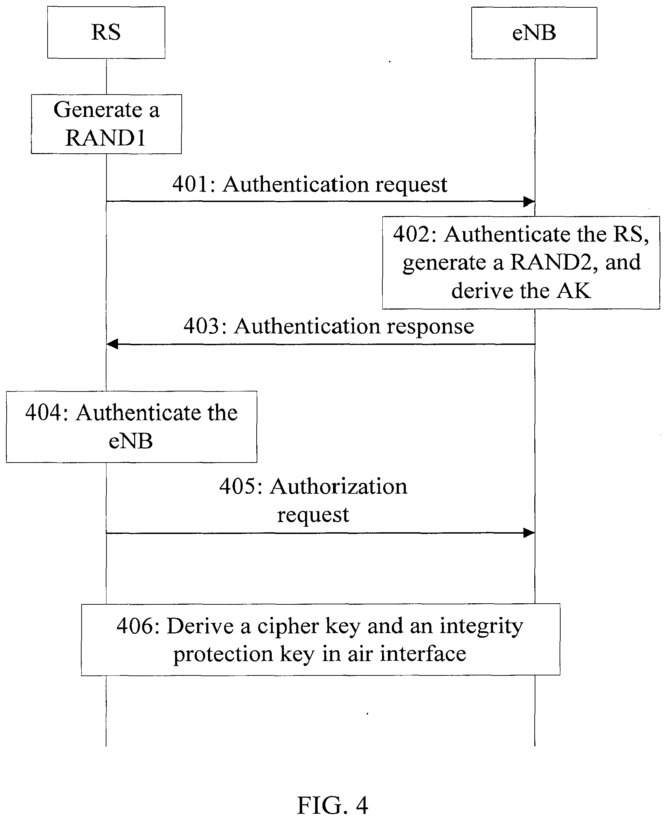

Referring to FIG. 4, steps for implementing a method of the embodiment 3 are introduced in detail below.

Step 401 is the same as the Step 301, and is not repeated here.

In Step 402, the eNB authenticates the RS, generates a RAND2, and derives an AK.

The eNB authenticates a digital certificate of the RS through the received signature of the RS on the digital certificate and the RAND1. After the authentication is successful, the eNB derives the AK, and generates the MAC 1 by performing integrity protection on the AK by using a private key of the eNB.

In Step 403, the eNB sends an authentication response to the RS.

The eNB ciphers the AK and the MAC1 by using a public key of the RS, and delivers the AK and the MAC1 to the RS via the authentication response. The authentication response also includes a digital certificate of the eNB, such as X.509 digital certificate, the key deriving algorithm of cipher and integrity protection in air interface selected by the eNB, a signature of the eNB on the digital certificate, and the RAND2 generated by the eNB.

In Step 404, the RS authenticates the eNB.

The RS authenticates a digital certificate of the eNB through the received signature of the eNB on the digital certificate and the RAND2. After the authentication is successful, the RS performs deciphering by using the private key of the RS, performs integrity check by using the public key of the eNB, and obtains the AK in air interface derived by the eNB.

In Step 405, the RS sends an authorization request to the eNB.

The authorization request may be included in an authorization request message. A MAC2 may be carried in the authorization request message. The MAC2 is generated by performing integrity protection on the authorization request through the obtained AK by the RS.

In addition, the authorization request message may also be selectively ciphered through the public key of the eNB, and then sent to the eNB.

So far, the RS has accessed the network, i.e., has completed the authentication of the RS. For the security of subsequent communications between the RS and the base station, the method may further include a Step 406.

In Step 406, the RS and the eNB respectively derive a cipher key and an integrity protection key in air interface.

The eNB performs integrity check according to the derived AK, thereby further determining the synchronization of the AK between the RS and the eNB. So far, both the RS and the eNB can respectively use the AK to further derive the cipher key and the integrity protection key for user plane and the cipher key and the integrity protection key for control plane in air interface through the selected key deriving algorithm of cipher and integrity protection.

In the present embodiment, the RS sends an authentication request including a digital certificate of the RS to the eNB, and the eNB sends an authentication response including a digital certificate of the eNB to the RS. After the RS is authenticated successful by the eNB, the eNB derives an AK and sends the AK to the RS for performing access authentication of the RS, which makes the RS need not to be equipped with a USIM card. Furthermore, a secure network access of the RS can be achieved without modifying the core network.

In both the embodiments 2 and 3, the AK is derived by the eNB. In the following embodiment, it is the RS that derives the AK and delivers the AK to the eNB through an interactive authentication process.

### Embodiment 4

In the present embodiment, it is the RS that derives an AK and sends the AK to the eNB with an interactive authentication process. Various systems that support digital certificate-based authentication can authenticate an RS after introducing the RS.

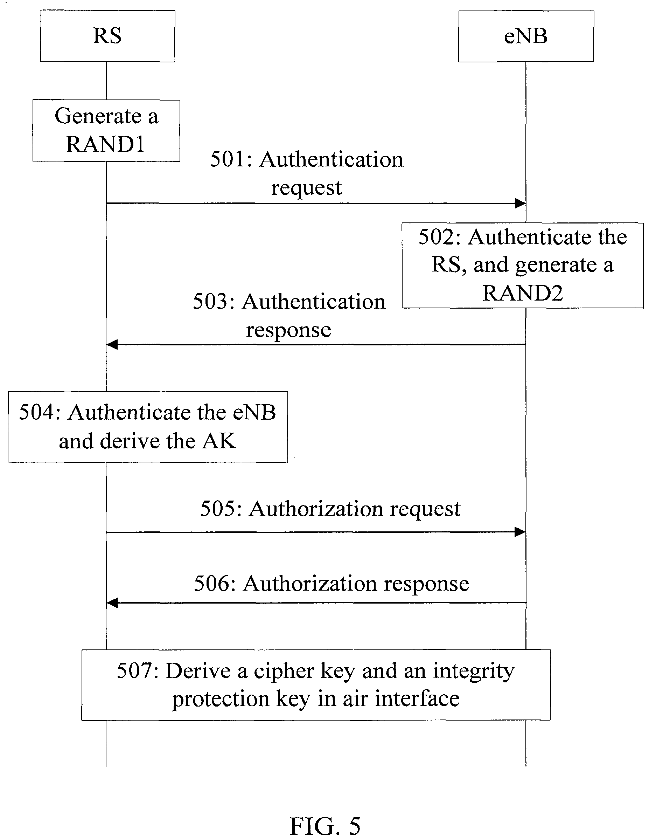

Referring to FIG. 5, steps for implementing a method of the embodiment 4 are introduced in detail below.

Steps 501-503 are the same as the Steps 301-303, and are not repeated here.

In Step 504, the RS authenticates the digital certificate of the eNB, and derives an AK.

The RS authenticates the digital certificate of the eNB through the received signature of the eNB on the digital certificate and the RAND2. After the network side is authenticated successful by the RS, the RS derives the AK.

In Step 505, the RS sends an authorization request to the eNB.

The AK may be carried in an authorization request message, and the authorization request is sent to the eNB. The integrity protection of the AK is performed to generate the MAC 1 by a private key of the RS firstly, and then the AK is ciphered by a public key of the eNB.

In Step 506, the eNB sends an authorization response to the RS.

The eNB deciphers the authorization request message by using a private key of the eNB, performs integrity check through a public key of the RS, and obtains the AK in air interface derived by the RS. The eNB uses the obtained AK to perform integrity protection on the authorization response to generate the MAC2, and then may selectively ciphered through the public key of the RS, then send the authorization response to the RS.

So far, the bidirectional authentication between the RS and the base station. For the security of subsequent communications between RS and the base station, the method may further include a Step 507.

In Step 507, the RS and the eNB respectively derive a cipher key and an integrity protection key in air interface.

The RS performs integrity check according to the derived AK, thereby further determining the synchronization of the AK between the RS and the eNB. So far, the RS and the eNB can respectively use the AK to further derive the cipher key and the integrity protection key for user plane and the cipher key and the integrity protection key for control plane in air interface through the selected key deriving algorithm of cipher and integrity protection.

In the present embodiment, the RS sends an authentication request including a digital certificate of the RS to the eNB, and the eNB sends an authentication response including a digital certificate of the eNB to the RS. After the authentication of both parties is successful, the RS derives an AK and sends the AK to the eNB for performing access authentication of the RS, which makes the RS need not to be equipped with a USIM card. Furthermore, a secure network access of the RS can be achieved without modifying the core network.

In the above embodiment, one party in the authentication derives the AK, and sends the AK to the other party in the authentication after being protected through ciphering. In the following embodiment, the shared AK in air interface is negotiated by exchanging through a key exchanging algorithm Diffie-Hellman (DH) method. That is, the key material required for the shared key, such as DHrs/DHbs values, is generated according to the DH algorithm through the interaction of the RS with the eNB, enabling the RS and the eNB to derive identical shared AK respectively through interaction.

### Embodiment 5

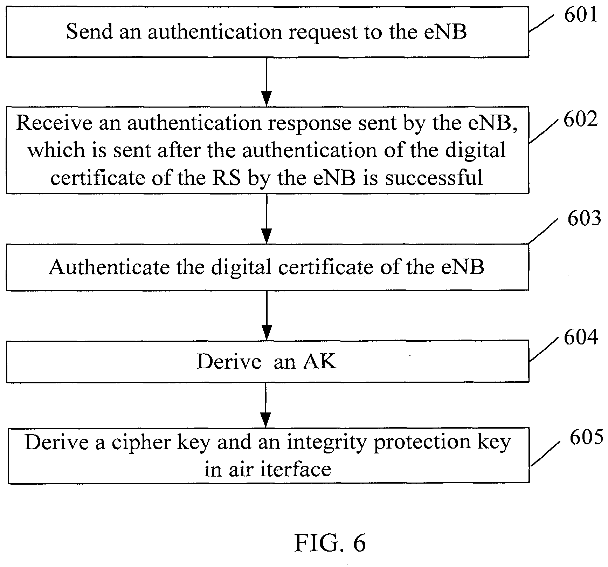

In the present embodiment, an air interface shared AK is negotiated by exchanging through DH method, achieving a secure network access of the RS. Various systems that support digital certificate-based authentication can authenticate an RS after introducing the RS. Referring to FIG. 6, an authentication method provided in the embodiment of the present invention includes the following steps.

In Step 601, an authentication request is sent to the eNB.

The authentication request includes a digital certificate of the RS, such as X.509 digital certificate, as well as capabilities of the RS, key material of the RS, a signature of the RS on the digital certificate, and the RAND 1.

In Step 602, an authentication response sent by the eNB is received. The authentication response is sent by the eNB after the digital certificate of the RS is authenticated successful by the eNB utilizing the signature of the RS on the digital certificate.

The authentication response includes a digital certificate of the eNB, such as X.509 digital certificate, the key deriving algorithm of cipher and integrity protection in air interface corresponding to the capability of the RS selected by the eNB, key material of the eNB, a signature of the eNB on the digital certificate, and a RAND2 generated by the eNB.

In Step 603, the digital certificate of the eNB is authenticated.

The digital certificate of the eNB is authenticated by utilizing the RAND2 and the signature of the eNB on the digital certificate.

In Step 604, an AK is derived from the key material of the eNB.

So far, the bidirectional authentication between the RS and the eNB is completed. For the security of subsequent communications between RS and the base station, the method may further include a Step 605.

In Step 605, an air interface cipher key and an integrity protection key in air interface are derived from the AK.

In the present embodiment, the RS sends an authentication request including a digital certificate of the RS to the eNB, and the eNB sends an authentication response including a digital certificate of the eNB to the RS. In this case, the key material of both parties is interacted via authentication request and authentication response, and both parties can each derive identical shared AK after the interaction of the key material of both parties, which makes the RS need not to be equipped with a USIM card. Furthermore, a secure network access of the RS can be achieved without modifying the core network.

In the embodiment 5, both parties can each derive identical shared AK after the interaction of the key material of both parties. Thus, a secure network access of the RS is achieved. In the following embodiment, both parties of authentication each derive identical shared AK, and further negotiate the consistence of the AK derived by both parties through subsequent interaction.

### Embodiment 6

In the present embodiment, an air interface shared AK is negotiated by exchanging through DH method, and the consistence of the derived AK derived by both parties is further negotiated through subsequent interaction, achieving a secure network access of the RS. Various systems that support digital certificate-based authentication can authenticate an RS after introducing the RS.

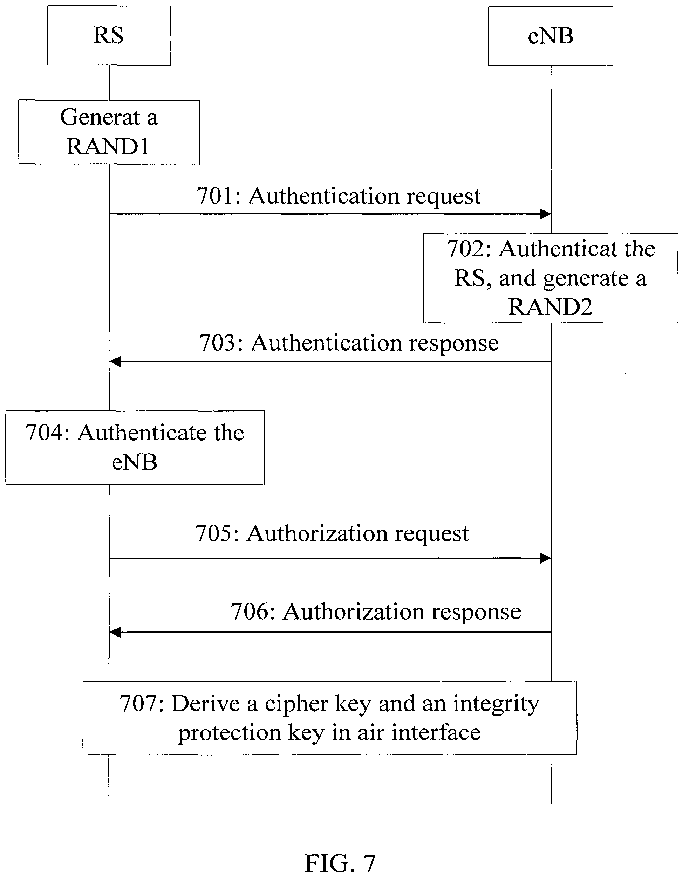

Referring to FIG. 7, steps for implementing a method of the embodiment 6 are introduced in detail below.

In Step 701, an RS sends an authentication request to an eNB.

The RS generates a RAND1, and sends an authentication request to the eNB. The authentication request may be included in an authentication request message, and includes a digital certificate of the RS, such as X.509 digital certificate, capabilities of the RS, key material DHrs of the RS, a signature of the RS on the digital certificate, and the RAND 1.

In Step 702, the eNB authenticates the RS, and generates a RAND2.

The eNB authenticates the digital certificate of the RS through the received signature of the RS on the digital certificate and the RAND1, and the RS is successfully authenticated by the eNB.

In Step 703, the eNB sends an authentication response to the RS.

The eNB would further select the key deriving algorithm of cipher and integrity protection in air interface according to capabilities of the RS and capabilities of the eNB, and returns the selected key deriving algorithm of cipher and integrity protection in air interface to the RS via the authentication response. The authentication response further includes the digital certificate of the eNB, such as X.509 digital certificate, and also a signature of the eNB on the digital certificate, the RAND2 randomly generated by the eNB, and the key material DHbs of the eNB.

So far, the RS and the eNB can each derive identical shared AK from the interacted key materials.

In Step 704, the RS authenticates the eNB.

The RS authenticates the digital certificate of the eNB through the received signature of the eNB on the digital certificate and the RAND2.

In Step 705, the RS sends an authorization request to the eNB.

The RS uses its derived AK to perform integrity protection on the authorization request to generate the MAC1, and the authorization request can be included in an authorization request message; the RS can send the MAC1 to the eNB via the authorization request message.

In Step 706, the eNB sends an authorization response to the RS.

The eNB authenticates the authorization request through its derived AK, and can use its derived AK to perform integrity protection on the authorization response to generate the MAC2 after the authentication is successful, and send the MAC2 to the RS.

So far, the bidirectional authentication between the RS and the eNB is completed. For the security of subsequent communications between the RS and the base station, the method may further include a Step 707.

In Step 707, the RS and the eNB respectively derive a cipher key and an integrity protection key in air interface.

After receiving the authorization response, the RS authenticates the MAC2 through its derived AK, and after the authentication is successful, the RS may further determine the synchronization of the AK between the RS and the eNB. So far, both the RS and the eNB can respectively use the AK to further derive the cipher key and the integrity protection key for user plane and the cipher key and the integrity protection key for control plane in air interface through selected key deriving algorithm of cipher and integrity protection.

In the present embodiment, the RS sends an authentication request including a digital certificate of the RS to the eNB, and the eNB sends an authentication response including a digital certificate of the eNB to the RS. In this case, the key material of both parties is interacted via authentication request and authentication response, and both parties can each derive identical shared AK after interaction of the key material of both parties, which makes the RS need not to be equipped with a USIM card. Meanwhile, a secure network access of the RS can be achieved without modifying the core network.

When the RS authentication process in the above embodiments is used for initial authentication, when the life cycle of the AK in air interface is timed out, the RS can adopt the fast re-authentication schemes in the embodiments 7 to 9 to update the AK in order to shorten the time delay of re-authentication, thereby ensuring the effectiveness of the AK in air interface. When an authentication scheme other than the RS access authentication schemes in the embodiments of the present invention is used for initial authentication, if the life cycle of the AK in air interface is timed out, the RS can also adopt the fast re-authentication schemes in the embodiments 7 to 11 to update the AK in order to shorten the time delay of re-authentication, thereby ensuring the effectiveness of the air interface AK.

### Embodiment 7

The present embodiment is a method for implementing re-authentication. Various systems that support digital certificate-based authentication can authenticate an RS after introducing the RS.

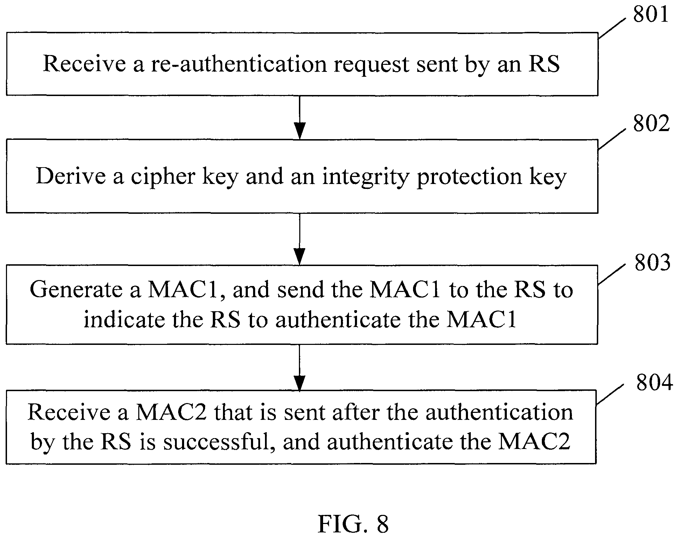

Referring to FIG. 8, steps for implementing a method of the embodiment 7 are introduced in detail below.

In Step 801, a re-authentication request sent by an RS is received.

An eNB receives the re-authentication request sent by the RS, the re-authentication request can be included in a re-authentication request message, and can also be included in other messages sent from the RS to the eNB .

In Step 802, the eNB derives a cipher key and an integrity protection key.

In Step 803, the eNB generates a MAC1 from the cipher key and the integrity protection key, and sends the MAC 1 to the RS, instructing the RS to authenticate the MAC1.

In Step 804, the eNB receives a MAC2 that is sent by the RS after the authentication by the RS is successful, and authenticates the MAC2.

The RS fast re-authentication process may be triggered by the RS, and may also be triggered by the eNB.

In the present embodiment, the cipher key and the integrity protection key for user plane and the cipher key and the integrity protection key for control plane are derived to achieve fast re-authentication, thus ensuring the effectiveness of the AK in air interface.

An RS triggered re-authentication process is taken as an example below to give corresponding embodiments according to different implementations.

### Embodiment 8

In the present embodiment, a new key in air interface is re-derived from an AK in air interface shared between an RS and an eNB, and a new cipher key and a new integrity protection key for user plane and a new cipher key and a new integrity protection key for control plane are further derived according to the new key in air interface to achieve fast re-authentication. Since the new keys in air interface obtained in each re-authentication process are derived from different old keys in air interface, it is hardly possible to derive the same key in air interface for two times. In order to avoid replay attack during the re-authentication process, it suffices to deduce through a simple uni-directional function. Various systems that support digital certificate-based authentication can authenticate an RS after introducing the RS. Specific description is carried out below with reference to the accompanying drawings.

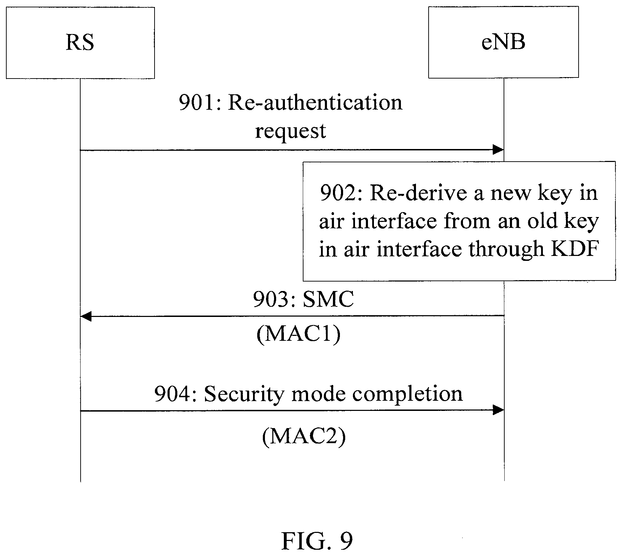

Referring to FIG. 9, steps for implementing a method of the embodiment 8 are introduced in detail below.

In Step 901, an RS sends a re-authentication request to an eNB.

The re-authentication request can be included in a re-authentication request message, and can also be included in other messages sent from the RS to the eNB.

In Step 902, the eNB re-derives a new key in air interface from an old key in air interface through key deriving function (KDF).

After receiving the re-authentication request sent by the RS, the eNB can derive the new key from an old AK in air interface authenticated initially through KDF, and further derive a cipher key and an integrity protection key from the new key in air interface.

In Step 903, the eNB sends a MAC1 to the RS.

The eNB can perform integrity protection on a SMC through a newly derived integrity protection key to generate the MAC1, and send the SMC to the RS.

In Step 904, the RS sends a MAC2 to the eNB.

After receiving the SMC carrying the MAC1, using the old AK in air interface as key deriving parameter, the RS derives a new AK corresponding to the eNB through KDF, and derives a new cipher key and a new integrity protection key for user plane and a new cipher key and a new integrity protection key for control plane. RS authenticates the obtained MAC1 by utilizing the new derived integrity protection key. After the authentication is successful, the RS performs integrity protection on security mode complete message or other messages that are sent to the eNB by the RS by using the new derived integrity protection key, and generates the MAC2 and sends the MAC2 to the eNB. After receiving the MAC2, the eNB generates the MAC1 according to its newly derived integrity protection key, and checks whether the MAC1 is consistent with the received MAC2; if yes, the check is successful, further confirming the synchronization of the newly derived AK between the RS and the eNB.

Although the present embodiment is described by taking RS triggered re-authentication process as an example, the method is equally applicable to eNB triggered re-authentication process.

In the present embodiment, a new key in air interface is directly re-derived through the old AK in air interface shared between the RS and the eNB, and a new cipher key and a new integrity protection key for user plane and a new cipher key and a new integrity protection key for control plane are further derived from the new key in air interface to achieve fast re-authentication, thereby ensuring the effectiveness of the AK in air interface.

In the embodiment 8, a new key in air interface is directly re-derived through the old AK in air interface shared between the RS and the eNB, and a new cipher key and a new integrity protection key for user plane and a new cipher key and a new integrity protection key for control plane are further derived from the new key in air interface to achieve fast re-authentication. The following embodiment introduces a method for achieving fast re-authentication by directly updating the cipher key and the integrity protection key for user plane and the cipher key and the integrity protection key for control plane shared between the RS and the eNB.

### Embodiment 9

In the present embodiment, the cipher key and the integrity protection key for user plane and the cipher key and the integrity protection key for control plane shared between the RS and the eNB are directly updated. Since the cipher key and the integrity protection key for user plane and the cipher key and the integrity protection key for control plane in air interface are derived from different old cipher key and old integrity protection key for user plane and different old cipher key and old integrity protection key for control plane of the air interface in each time, it is hardly possible to derive the same key in air interface for two times. In order to avoid replay attack during the re-authentication process, it suffices to deduce through a simple uni-directional function. Various systems that support digital certificate-based authentication can authenticate an RS after introducing the RS. Specific description is carried out below with reference to the accompanying drawings.

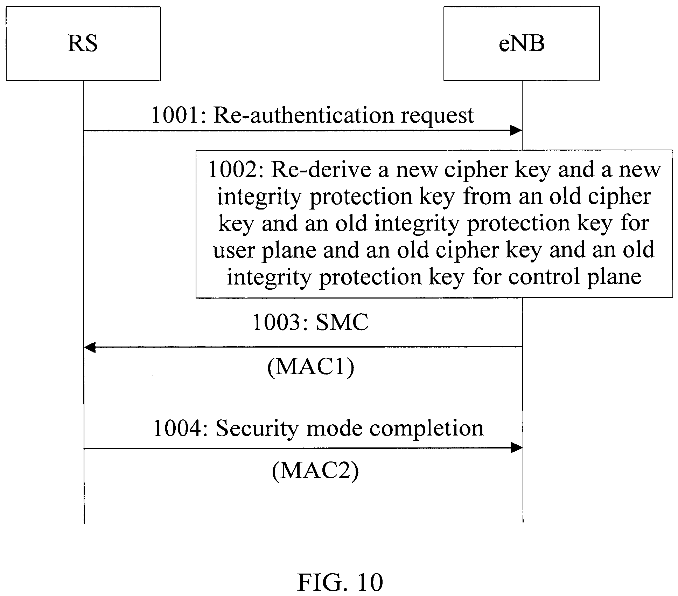

Referring to FIG. 10, steps for implementing a method of the embodiment 9 are introduced in detail below.

Step 1001 is the same as the Step 901, and is not repeated here.

In Step 1002, the eNB derives a new cipher key and a new integrity protection key from an old cipher key and an old integrity protection key that are authenticated initially.

After receiving the re-authentication request, the eNB can use the old cipher key and the old integrity protection key that are authenticated initially as parameters to derive the cipher key and the integrity protection key directly through KDF.

Step 1003 is the same as the Step 903, and is not repeated here.

In Step 1004, the RS sends a MAC2 to the eNB.

After receiving the SMC carrying the MAC1, the RS takes the old cipher key and the old integrity protection key for user plane and the old cipher key and the old integrity protection key for control plane in the air interface as parameters, and derives a new cipher key and a new integrity protection key for user plane and a new cipher key and a new integrity protection key for control plane corresponding to the eNB through KDF, and authenticates the obtained MAC1 by utilizing the newly derived integrity protection key. After the authentication is successful, the RS performs integrity protection on security mode complete message or possibly other messages that are sent to the eNB by the RS by using the newly derived integrity protection key, and generates the MAC2 and sends the MAC2 to the eNB. After receiving the MAC2, the eNB generates the MAC1 according to its newly derived integrity protection key, and checks whether the MAC1 is consistent with the received MAC2; if yes, the check is successful, further confirming the synchronization of the newly derived AK between the RS and the eNB.

Although the present embodiment is described by taking an RS triggered re-authentication process as an example, the method is equally applicable to an eNB triggered re-authentication process.

In the present embodiment, the cipher key and the integrity protection key for user plane and the cipher key and the integrity protection key for control plane shared between the RS and the eNB are directly updated to achieve fast re-authentication, thus ensuring the effectiveness of the air interface AK.

### Embodiment 10

The present embodiment adopts the manner of avoiding replay attack in existing LTE system, which is achieved through a maintained COUNT value between an RS and an eNB. Specific description is carried out below with reference to the accompanying drawings.

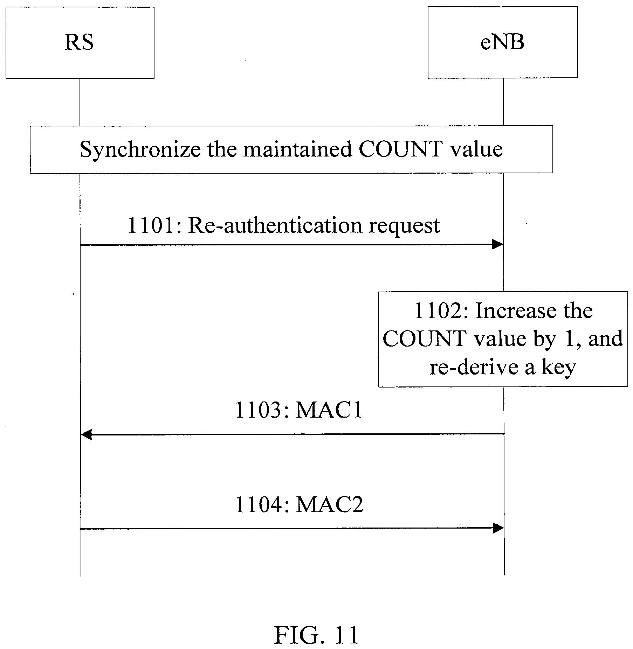

Referring to FIG. 11, a method of the embodiment 10 is introduced in detail below.

First, an RS and an eNB synchronize the maintained COUNT value.

In Step 1101, the RS sends a re-authentication request to the eNB.

The re-authentication request may be included in a re-authentication request message.

In Step 1102, the eNB increases the COUNT value by 1, and re-derives a key.

After receiving the re-authentication request sent by the RS, the eNB increases the maintained COUNT value by 1, derives new key *K_{eNB-RS}* in air interface from the shared key *K_{ASME-RS},* and further derives cipher key and integrity protection key from the new key in air interface. The shared key *K_{ASME-RS}* is shared between the eNB and the RS.

In Step 1103, the eNB sends a MAC1 to the RS.

The eNB uses the newly derived integrity protection key to perform integrity protection on a SMC message or other message in which a COUNT value maintained by eNB is carried, and generates the MAC1, then sends the MAC1 which is ciphered by using an old cipher key in air interface to the RS.

In Step 1104, the RS sends a MAC2 to the eNB.

The RS deciphers the MAC1 by utilizing the old cipher key in air interface, and then uses the shared key *K_{ASME-RS}* and the COUNT value obtained by deciphering as parameters to re-derives a new key *K_{eNB-RS}* in air interface corresponding to the eNB, and to re-derive a new cipher key and a new integrity protection key for user plane and a new cipher key and a new integrity protection key for control plane, and authenticates the MAC1 by utilizing the newly derived integrity protection key. After the authentication is successful, the RS compares the received COUNT value and a COUNT value maintained by the RS. If the former is greater the latter, it means that no replay attack occurs, otherwise, it means that replay attack occurs. The RS utilizes the newly generated integrity protection key to perform integrity protection on a security mode complete message to generate the MAC2 to be sent to the eNB, or performs integrity protection on other messages to generate the MAC2 to be sent to the eNB. After receiving the MAC2, the eNB generates a MAC according to its newly derived integrity protection key, and checks whether the generated MAC is consistent with the received MAC2; if yes, the check is successful, further confirming the synchronization of the newly derived AK between the RS and the eNB.

Although the present embodiment is described by taking an RS triggered re-authentication process as an example, the method is equally applicable to an eNB triggered re-authentication process.

In the present embodiment, a new key *K_{eNB-RS}* in air interface between the RS and the eNB is re-derived by utilizing the shared key *K_{ASME-RS}.* Thus, a new cipher key and a new integrity protection key for user plane and a new cipher key and a new integrity protection key for control plane are further derived from the new key in air interface. Fast re-authentication is achieved by adopting the manner of avoiding replay attack in existing LTE system and through the COUNT value maintained between the RS and the eNB, thereby ensuring the effectiveness of the air interface AK.

The embodiment 10 adopts the manner of avoiding replay attack in existing LTE system, which is achieved through the maintained COUNT value between the RS and the eNB. The following introduces a method for achieving fast re-authentication by adopting a RAND and introducing some variables as key deriving parameters during each key deriving.

### Embodiment 11

The present embodiment is a method for achieving fast re-authentication by adopting a RAND and introducing some variables as key deriving parameters during each key deriving, which is described in detail below with reference to the accompanying drawings.

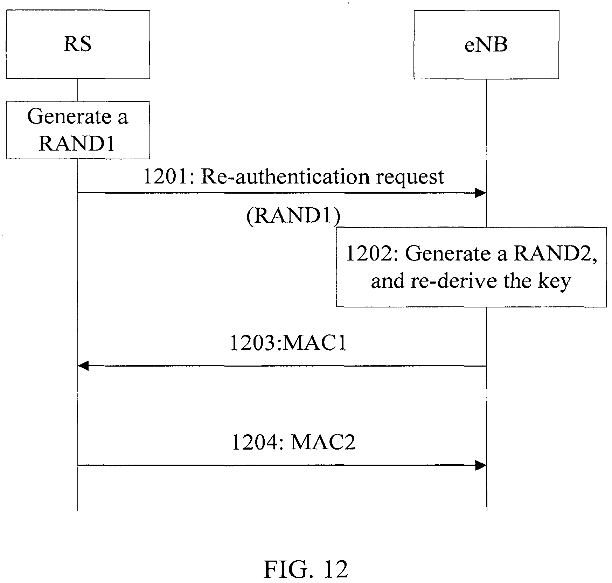

Referring to FIG. 12, steps for implementing a method of the embodiment 11 are introduced in detail below.

In Step 1201, an RS sends a re-authentication request to an eNB.

The above re-authentication request can be included in a re-authentication request message. The RS generates a RAND1, and sends the RAND1 to the eNB via the re-authentication request.

In Step 1202, the eNB randomly generates a RAND2, and re-derives a key.

After receiving the re-authentication request, the eNB generates the RAND2, and can derive a key in air interface from the RAND1, the RAND2, and a shared key through KDF, where the shared key *K_{ASME-RS}* is shared between the eNB and the RS, and derive a cipher key and an integrity protection key from the key in air interface.

In Step 1203, the eNB sends a MAC1 to the RS.

The eNB uses newly derived integrity protection key to perform integrity protection on a SMC carrying the RAND2 or other messages that are sent to the RS by the eNB to generate the MAC 1, and then ciphers the MAC1 and the RAND2 through an old cipher key in air interface and sends the ciphered MAC1 and the ciphered RAND2 to the RS.

In Step 1204, the RS sends a MAC2 to the eNB.

The RS deciphers the MAC2 by utilizing the old key in air interface, takes the RAND2 obtained by deciphering in combination with the RAND1 and the shared key *K_{ASME-RS}* as key deriving parameters to derive new key *K_{eNB-RS}* in air interface corresponding to the eNB and a new cipher key and a new integrity protection key for user plane and a new cipher key and a new integrity protection key for control plane through KDF, and authenticates the obtained MAC1 by utilizing the newly derived integrity protection key. After the authentication is successful, the RS utilizes the newly derived integrity protection key to perform integrity protection on a security mode complete message or other messages that are sent to the eNB by the RS to generate the MAC2 to be sent to the eNB. After receiving the MAC2, the eNB generates a MAC according to its newly derived integrity protection key, and compares the MAC with the received MAC2, if they are consistent, the check is successful, further confirming the synchronization of the newly derived AK between the RS and the eNB.

Although the present embodiment is described by taking an RS triggered re-authentication process as an example, the method is equally applicable to an eNB triggered re-authentication process.

In the present embodiment, a new key *K_{eNB-RS}* in air interface between the RS and the eNB is re-derived by utilizing the shared key *K_{ASME-RS}* Thus, a new cipher key and a new integrity protection key for user plane and a new cipher key and a new integrity protection key for control plane are further derived according to the new key in air interface. Fast re-authentication is achieved by adopting a RAND and introducing some variables as key deriving parameters during each key deriving, thereby ensuring the effectiveness of the air interface AK.

The forgoing embodiments introduce several methods for RS access authentication and RS re-authentication, the following introduces relevant apparatus.

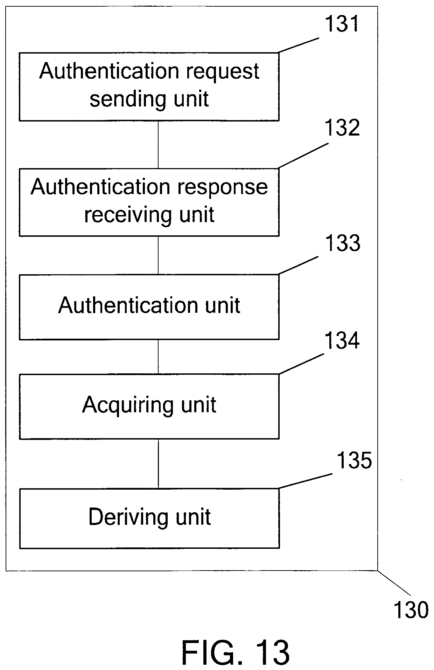

Referring to FIG. 13, various systems that support digital certificate-based authentication can authenticate an RS after introducing the RS. A communication apparatus 130 is provided, which includes an authentication request sending unit 131, an authentication response receiving unit 132, an authentication unit 133 and an acquiring unit 134.

The authentication request sending unit 131 is configured to send an authentication request to an eNB, the authentication request including a digital certificate of an RS.

The authentication response receiving unit 132 is configured to receive an authentication response sent by the eNB, where the authentication response includes a digital certificate of the eNB and is sent by the eNB after authentication of the digital certificate of the RS is successful.

The authentication response receiving unit 132 receives the authentication response sent by the eNB after the authentication by the eNB of the digital certificate of the RS sent by the authentication request sending unit 131 is successful.

The authentication unit 133 is configured to authenticate the digital certificate of the eNB received by the authentication response receiving unit 132.

The acquiring unit 134 is configured to acquire an authentication key.

The acquiring unit 134 may acquire the AK or derive the AK after the authentication of the authentication unit 133 is successful, and may acquire the AK from the authentication response receiving unit 132.

The communication apparatus 130 may further include a deriving unit 135, which is configured to derive a cipher key and integrity protection key in air interface from the authentication key acquired by the acquiring unit 134.

The communication apparatus 130 may further include:
an authorization request sending unit, configured to send an authorization request to an eNB after authentication of the authentication unit 133 is successful to instruct the eNB to check the authorization request;
an authorization response receiving unit, configured to receive an authorization response that is sent by the eNB after the check of the authorization request is successful, the authorization response including an AK derived by the eNB; and
a checking unit, configured to check the authorization response received by the authorization response receiving unit.

The authentication response receiving unit 132 is further configured to receive the AK derived by the eNB.

The acquiring unit 134 is configured to derive an AK. The communication apparatus 130 may further include:
an authorization request sending unit, configured to send an authorization request to an eNB to instruct the eNB to check the authorization request, the authorization request including the AK;
an authorization response receiving unit, configured to receive an authorization response that is sent by the eNB after the check is successful; and
a checking unit, configured to check the authorization response received by the authorization response receiving unit.

The authentication response receiving unit 132 is further configured to receive key material of the eNB; the acquiring unit 134 is configured to derive the AK from the key material of the eNB.

The above communication apparatus 130 can be used for achieving the authentication methods mentioned in various embodiments described above, but is not limited to achieve the authentication methods.

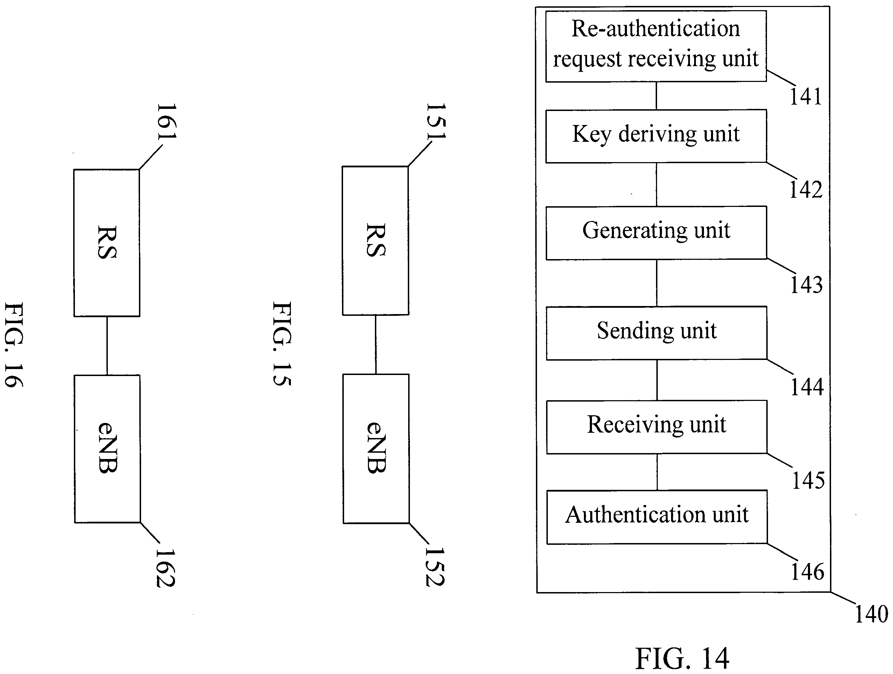

Referring to FIG. 14, a communication apparatus 140 is provided, which includes a re-authentication request receiving unit 141, a key deriving unit 142, a generating unit 143, a sending unit 144, a receiving unit 145 and an authentication unit 146.

The re-authentication request receiving unit 141 is configured to receive a re-authentication request sent by an RS.

The key deriving unit 142 is configured to derive a cipher key and an integrity protection key.

The key deriving unit 142 derives the cipher key and the integrity protection key after receiving the re-authentication request of the re-authentication request receiving unit 141.

The generating unit 143 is configured to generate a MAC1 from the cipher key and the integrity protection key derived by the key deriving unit 142.

The sending unit 144 is configured to send the MAC1 generated by the generating unit 143 to the RS to instruct the RS to authenticate the MAC1.

The receiving unit 145 is configured to receive a MAC2 that is sent by the RS after the authentication is successful.

The receiving unit 145 may receive the MAC2 sent by the RS after the authentication by the RS of the MAC1 sent by the sending unit 144 is successful.

The authentication unit 146 is configured to authenticate the MAC2 received by the receiving unit 145.

The above communication apparatus 140 can be used for achieving the re-authentication methods mentioned in various embodiments described above, but is not limited to achieve the re-authentication methods.

Referring to FIG. 15, a communication system is provided, which includes an RS 151 and an eNB 152.

The RS 151 is configured to send an authentication request to the eNB 152, the authentication request including a digital certificate of the RS, receive an authentication response that is sent by the eNB 152 after the authentication of the digital certificate of the RS is successful, the authentication response including a digital certificate of the eNB, authenticate the digital certificate of the eNB, acquire an AK, and derive a cipher key and an integrity protection key from the AK according to a key deriving algorithm.

The eNB 152 is configured to receive the authentication request sent by the RS 151, the authentication request including the digital certificate of the RS, authenticate the digital certificate of the RS, send an authentication response to the RS 151 if the authentication is successful, and derive a cipher key and an integrity protection key in air interface.

The RS 151 is further configured to send an authorization request to the eNB 152, receive an authorization response that is sent by the eNB 152 after the check of the authorization request is successful, and check the authorization response. The eNB 152 is further configured to check the authorization request, derive an AK after the check is successful, and send the authorization response to the RS 151, the authorization response including the AK derived by the eNB.

The eNB 152 is further configured to derive the AK, and check the authorization request sent by the RS 151; the RS 151 is further configured to receive the AK sent by the eNB 152, and send an authorization request to the eNB.

The RS 151 is further configured to derive an AK, send an authorization request which includes the AK to the eNB 152, receive an authorization response that is sent by the eNB 152 after the check is successful, and check the authorization response. The eNB 152 is further configured to receive the authorization request which includes the AK derived by the RS 151, check the authorization request, and send the authorization response to the RS 151 after the check is successful.

The RS 151 is further configured to receive key material of the eNB 152, and derive an AK from the key material of the eNB; the eNB 152 is further configured to send the key material of the eNB to the RS 151.

The RS 151 is further configured to send the key material of the RS to the eNB 152; the eNB 152 is further configured to derive an AK from the key material of the RS.

The RS 151 is further configured to send an authorization request to the eNB 152, receive an authorization response that is sent by the eNB 152 after the check is successful, and check the authorization response; the eNB 152 is further configured to check the authorization request, and send the authorization response to the RS 151 after the check is successful.

The RS 151 of the above communication system is further configured to generate a RAND1, send a signature of the RS on a digital certificate and the RAND1 to the eNB 152, and receive the signature of the eNB 152 on the digital certificate of the eNB and a RAND2 generated by the eNB. The eNB 152 is further configured to generate the RAND2 and send the signature of the eNB on the digital certificate of the eNB and the RAND2 generated by the eNB.

The above communication apparatus can be used for achieving the authentication methods mentioned in various embodiments described above, but is not limited to achieve the authentication methods.

Referring to FIG. 16, a communication system is provided, which includes an RS 161 and an eNB 162.

The RS 161 is configured to send a re-authentication request, receive a MAC1 sent by the eNB 162, derive a cipher key and an integrity protection key, authenticate the received MAC 1 by utilizing the cipher key and the integrity protection key, generate a MAC2 from the cipher key and the integrity protection key, and send the MAC2 to the eNB 162.

The eNB 162 is configured to receive the re-authentication request sent by the RS 161, derive a cipher key and a integrity protection key, generate the MAC1 from the cipher key and the integrity protection key, send the MAC1 to the RS 161, receive a MAC2 that is sent by the RS 161 after the authentication is successful, and check the MAC2.

The above communication apparatus can be used for achieving the re-authentication methods mentioned in various embodiments described above, but is not limited to achieve the re-authentication methods.

In summary, in the embodiments of the present invention, an RS sends an authentication request including a digital certificate of the RS to a base station, and receives an authentication response including a digital certificate of the base station sent by the base station; the authentication response is sent by the base station after the authentication of the digital certificate of the RS is successful. In this case, authentication is performed in a bidirectional way, thus enabling the base station to implement a secure network access of the RS without equipping the RS with a USIM card. Meanwhile, in order to shorten the time delay for updating the authentication key, the present invention further provides a method for an RS to implement re-authentication quickly, in which a base station receives a re-authentication request sent by the RS, re-derives a cipher key and an integrity protection key, and performs authentication by utilizing the re-derived cipher key and integrity protection key, thus ensuring the synchronization of newly derived authentication keys between the RS and the base station and ensuring the effectiveness of the AK in air interface.

Further, the AK can be derived by either one of the RS or the base station, and can be sent to the other party in the authentication. Alternatively, the shared AK in air interface is negotiated by exchanging through DH method, enabling the base station to implement a secure network access of the RS without equipping the RS with a USIM card.

Further, in the embodiments of the present invention, it is only the access network side that implements the authentication of the RS, thereby achieving a secure network access of the RS without modifying the core network, and thus minimizing the effect of the system after introducing the RS on the whole network.

Further, the base station achieves fast re-authentication by receiving a re-authentication request of the RS and re-deriving a new key in air interface by utilizing an key in air interface shared between the RS and the base station, or by updating the cipher key and integrity protection key for user plane and the cipher key and integrity protection key for control plane shared between the RS and the base station, thereby ensuring the effectiveness of the AK in air interface.

Further embodiments of the present invention are provided in the following. It should be noted that the numbering used in the following section does not necessarily need to comply with the numbering used in the previous sections.
Embodiment 1. An authentication method, comprising:
   sending, by a relay station (RS), an authentication request to a base station, the authentication request including a digital certificate of the RS;
   receiving an authentication response sent by the base station, the authentication response including a digital certificate of the base station and being sent by the base station after authentication of the digital certificate of the RS is successful;
   authenticating the digital certificate of the base station; and
   acquiring an authentication key (AK).
Embodiment 2. The authentication method of embodiment 1, wherein after the acquiring the AK, the method further comprises:
   deriving a cipher key (CK) and an integrity protection key in air interface from the AK.
Embodiment 3. The authentication method of embodiment 1 or 2, wherein after the authenticating the digital certificate of the base station, the method further comprises:
   sending an authorization request to the base station; and
   receiving an authorization response that is sent by the base station after a check of the authorization request is successful, and checking the authorization response which comprises the AK, the AK is derived by the base station.
Embodiment 4. The authentication method of embodiment 1 or 2, wherein the authentication response sent by the base station further comprises:
   the AK derived by the base station.
   Embodiment 5. The authentication method of embodiment 1 or 2, wherein the AK is derived by the RS;
   after the acquiring the AK, the method further comprises:
      sending an authorization request to the base station to instruct the base station to check the authorization request which comprises the AK; and
      receiving the authorization response that is sent by the base station after the check is successful, and checking the authorization response.
Embodiment 6. The authentication method of embodiment 1 or 2, wherein the authentication response further comprises:
   key material of the base station;
   the acquiring of the AK specifically comprises:
      deriving, by the RS, the AK from the key material of the base station.
Embodiment 7. The authentication method of embodiment 6, wherein the authentication request further comprises:
   the key material of the RS, which instruct the base station to derive the AK from the key material of the RS.
Embodiment 8. A re-authentication method, comprising:
   receiving a re-authentication request sent by a relay station (RS);
   deriving a cipher key and an integrity protection key;
   generating a first message authentication code (MAC1) from the cipher key and the integrity protection key;
   sending the MAC 1 to the RS to instruct the RS to authenticate the MAC 1; and
   receiving a second message authentication code (MAC2) that is sent by the RS after the authentication is successful, and authenticating the MAC2.
Embodiment 9. The re-authentication method of embodiment 8, wherein the deriving of the cipher key and the integrity protection key comprises:
   deriving a new key in air interface from an old key in air interface authenticated initially, and deriving the cipher key and the integrity protection key from the new derived key.
Embodiment 10. The re-authentication method of embodiment 8, wherein the deriving of the cipher key and the integrity protection key comprises:
   deriving the cipher key and the integrity protection key from an old cipher key and an old integrity protection key.
Embodiment 11. The re-authentication method of embodiment 8, wherein the deriving of the cipher key and the integrity protection key comprises:
   deriving an key in air interface from a shared key, and deriving the cipher key and the integrity protection key from the derived key, where the shared key is shared between the base station and the RS.
Embodiment 12. The re-authentication method of embodiment 8, wherein:
   the received re-authentication request comprises a first random number (RAND1) generated by the RS;
   before the deriving the cipher key and the integrity protection key, the method further comprises:
      generating a second random number (RAND2);
      the deriving of the cipher key and the integrity protection key comprises:
         deriving an key in air interface from the RAND1, the RAND2, and the shared key, where the shared key is shared between the base station and the RS; and
         deriving the cipher key and the integrity protection key from the derived key.
Embodiment 13. An authentication apparatus, comprising:
   an authentication request sending unit, configured to send an authentication request to a base station, the authentication request including a digital certificate of a relay station (RS);
   an authentication response receiving unit, configured to receive an authentication response sent by the base station, the authentication response including a digital certificate of the base station and being sent by the base station after an authentication of the digital certificate of the RS is successful;
   an authentication unit, configured to authenticate the digital certificate of the base station received by the authentication response receiving unit; and
   an acquiring unit, configured to acquire an authentication key (AK).
Embodiment 14. The communication apparatus of embodiment 13, further comprising:
   a deriving unit, configured to derive a cipher key and an integrity protection key in air interface from the AK acquired by the acquiring unit.
Embodiment 15. The communication apparatus of embodiment 13 or 14, further comprising:
   an authorization request sending unit, configured to send an authorization request to the base station after the authentication of the authentication unit is successful;
   an authorization response receiving unit, configured to receive an authorization response that is sent by the base station after a check of the authorization request is successful, the authorization response including the AK derived by the base station; and
   a checking unit, configured to check the authorization response received by the authorization response receiving unit.
Embodiment 16. The communication apparatus of embodiment 13 or 14, wherein the authentication response receiving unit is further configured to receive the AK derived by the base station.
Embodiment 17. The communication apparatus of embodiment 13 or 14, wherein:
   the acquiring unit is configured to derive the AK;
   the communication apparatus further comprises:
      an authorization request sending unit, configured to send an authorization request to the base station to instruct the base station to check the authorization request which comprises the AK;
      an authorization response receiving unit, configured to receive an authorization response that is sent by the base station after the check is successful; and
      a checking unit, configured to check the authorization response received by the authorization response receiving unit.
Embodiment 18. The communication apparatus of embodiment 13 or 14, wherein:
   the authentication response receiving unit is further configured to receive key material of the base station;
   the acquiring unit is configured to derive the AK from the key material of the base station.
   Embodiment 19. An authentication apparatus, comprising:
      a re-authentication request receiving unit, configured to receive a re-authentication request sent by a relay station (RS);
      a key deriving unit, configured to derive a cipher key and an integrity protection key;
      a generating unit, configured to generate a first message authentication code (MAC1) from the cipher key and the integrity protection key derived by the key deriving unit;
      a sending unit, configured to send the MAC1 generated by the generating unit to the RS to instruct the RS to authenticate the MAC1;
      a receiving unit, configured to receive a second message authentication code (MAC2) that is sent by the RS after the authentication is successful; and
      an authentication unit, configured to authenticate the MAC2 received by the receiving unit.
Embodiment 20. A communication system, comprising:
   the communication apparatus of any one of embodiments 13-18.

Embodiment 21. A communication system, comprising:
the communication apparatus of embodiment 19.

It can be appreciated to those of ordinary skill in the art that all or a portion of the steps of various methods of the above embodiments can be implemented by instruction-related hardware through a program, and the program can be stored in a computer readable storage media, which may include read only memory, random access memory, magnetic disk or optic disk and the like.

The forgoing introduces in detail the authentication method, the re-authentication method, the communication apparatus, and the communication system provided in the embodiments of the present invention. Specific instances are applied to illustrate the principle and implementation of the present invention, which is used only for helping to understand the present invention. Meanwhile, for those of ordinary skill in the art, variations to specific implementation and application scope are possible based on the specific implementations of present invention.

## Claims

1. An authentication method, comprising:
sending, by a relay station (RS), an authentication request to a base station, the authentication request including a digital certificate of the RS;
receiving an authentication response sent by the base station, the authentication response including a digital certificate of the base station and being sent by the base station after authentication of the digital certificate of the RS is successful;
authenticating the digital certificate of the base station; and
acquiring an authentication key (AK).

2. The authentication method of claim 1, wherein after the acquiring the AK, the method further comprises:
deriving a cipher key (CK) and an integrity protection key in air interface from the AK.

3. The authentication method of claim 1 or 2, wherein after the authenticating the digital certificate of the base station, the method further comprises:
sending an authorization request to the base station; and
receiving an authorization response that is sent by the base station after a check of the authorization request is successful, and checking the authorization response which comprises the AK, the AK is derived by the base station.

4. The authentication method of claim 1 or 2, wherein the authentication response sent by the base station further comprises:
the AK derived by the base station.

5. The authentication method of claim 1 or 2, wherein the AK is derived by the RS;
after the acquiring the AK, the method further comprises:
sending an authorization request to the base station to instruct the base station to check the authorization request which comprises the AK; and
receiving the authorization response that is sent by the base station after the check is successful, and checking the authorization response.

6. The authentication method of claim 1 or 2, wherein the authentication response further comprises:
key material of the base station;
the acquiring of the AK specifically comprises:
deriving, by the RS, the AK from the key material of the base station.

7. The authentication method of claim 6, wherein the authentication request further comprises:
the key material of the RS, which instruct the base station to derive the AK from the key material of the RS.

8. A re-authentication method, comprising:
receiving a re-authentication request sent by a relay station (RS);
deriving a cipher key and an integrity protection key;
generating a first message authentication code (MAC1) from the cipher key and the integrity protection key;
sending the MAC 1 to the RS to instruct the RS to authenticate the MAC1; and
receiving a second message authentication code (MAC2) that is sent by the RS after the authentication is successful, and authenticating the MAC2.

9. The re-authentication method of claim 8, wherein the deriving of the cipher key and the integrity protection key comprises:
deriving a new key in air interface from an old key in air interface authenticated initially, and deriving the cipher key and the integrity protection key from the new derived key.

10. The re-authentication method of claim 8, wherein the deriving of the cipher key and the integrity protection key comprises:
deriving the cipher key and the integrity protection key from an old cipher key and an old integrity protection key.

11. The re-authentication method of claim 8, wherein the deriving of the cipher key and the integrity protection key comprises:
deriving an key in air interface from a shared key, and deriving the cipher key and the integrity protection key from the derived key, where the shared key is shared between the base station and the RS.

12. The re-authentication method of claim 8, wherein:
the received re-authentication request comprises a first random number (RAND1) generated by the RS;
before the deriving the cipher key and the integrity protection key, the method further comprises:
generating a second random number (RAND2);
the deriving of the cipher key and the integrity protection key comprises:
deriving an key in air interface from the RAND1, the RAND2, and the shared key, where the shared key is shared between the base station and the RS; and
deriving the cipher key and the integrity protection key from the derived key.

13. An authentication apparatus, comprising:
an authentication request sending unit, configured to send an authentication request to a base station, the authentication request including a digital certificate of a relay station (RS);
an authentication response receiving unit, configured to receive an authentication response sent by the base station, the authentication response including a digital certificate of the base station and being sent by the base station after an authentication of the digital certificate of the RS is successful;
an authentication unit, configured to authenticate the digital certificate of the base station received by the authentication response receiving unit; and
an acquiring unit, configured to acquire an authentication key (AK).

14. The communication apparatus of claim 13, further comprising:
a deriving unit, configured to derive a cipher key and an integrity protection key in air interface from the AK acquired by the acquiring unit.

15. The communication apparatus of claim 13 or 14, further comprising:
an authorization request sending unit, configured to send an authorization request to the base station after the authentication of the authentication unit is successful;
an authorization response receiving unit, configured to receive an authorization response that is sent by the base station after a check of the authorization request is successful, the authorization response including the AK derived by the base station; and
a checking unit, configured to check the authorization response received by the authorization response receiving unit.

16. The communication apparatus of claim 13 or 14, wherein the authentication response receiving unit is further configured to receive the AK derived by the base station.

17. The communication apparatus of claim 13 or 14, wherein:
the acquiring unit is configured to derive the AK;
the communication apparatus further comprises:
an authorization request sending unit, configured to send an authorization request to the base station to instruct the base station to check the authorization request which comprises the AK;
an authorization response receiving unit, configured to receive an authorization response that is sent by the base station after the check is successful; and
a checking unit, configured to check the authorization response received by the authorization response receiving unit.

18. The communication apparatus of claim 13 or 14, wherein:
the authentication response receiving unit is further configured to receive key material of the base station;
the acquiring unit is configured to derive the AK from the key material of the base station.

19. An authentication apparatus, comprising:
a re-authentication request receiving unit, configured to receive a re-authentication request sent by a relay station (RS);
a key deriving unit, configured to derive a cipher key and an integrity protection key;
a generating unit, configured to generate a first message authentication code (MAC1) from the cipher key and the integrity protection key derived by the key deriving unit;
a sending unit, configured to send the MAC1 generated by the generating unit to the RS to instruct the RS to authenticate the MAC1;
a receiving unit, configured to receive a second message authentication code (MAC2) that is sent by the RS after the authentication is successful; and
an authentication unit, configured to authenticate the MAC2 received by the receiving unit.
